## Europäisches Patentamt
## European Patent Office
## Office européen des brevets

(19)

(11) Publication number: **0 004 401**
**B1**

(12)
# EUROPEAN PATENT SPECIFICATION

(45) Date of publication of patent specification: **03.02.82**

(51) Int. Cl.³: **B 01 J 3/04, C 10 J 3/74**

(21) Application number: **79200126.5**

(22) Date of filing: **14.03.79**

(54) Reactor with screen and gasification process.

(30) Priority: **22.03.78 NL 7803074**

(43) Date of publication of application:
**03.10.79 Bulletin 79/20**

(45) Publication of the grant of the European patent:
**03.02.82 Bulletin 82/5**

(84) Designated Contracting States:
**DE FR GB IT**

(56) References cited:
**CH - A - 116 962**
**FR - A - 529 476**
**FR - A - 872 332**
**FR - A - 903 203**
**US - A - 2 179 638**

(73) Proprietor: **SHELL INTERNATIONALE RESEARCH MAATSCHAPPIJ B.V.**
**Carel van Bylandtlaan 30**
**NL-2596 HR DEN HAAG (NL)**

(72) Inventor: **Ter Haar, Leonard Willem**
**Carel van Bylandtlaan 30**
**The Hague (NL)**
Inventor: **Vogel, Jacobus Elso**
**Carel van Bylandtlaan 30**
**The Hague (NL)**

(74) Representative: **Keuzenkamp, Abraham et al,**
**c/o Shell Internationale Research Maatschappij**
**B.V. P.O. Box 302**
**NL-2501 CH 's-Gravenhage (NL)**

Courier Press, Leamington Spa, England.

Reactor with screen and gasification process

The invention relates to a reactor suitable for carrying out reactions at super-atmospheric pressures and at elevated temperature, in which gases are released which are corrosive when dissolved in water, which reactor has a steel shell the inside of which is lined with refractory and heat-insulating layer. The invention further relates to a process in which a reactor of this type is used for the gasification of coal and/or hydrocarbons.

The metal shell of such a reactor is mostly protected against overheating on the inside by a refractory lining of the above-mentioned layer, consisting of bricks, concrete and/or other heat-resistant materials.

Between the heat-insulating layer and the inside of the reactor shell there is usually some space, since the insulating layer does not fit tightly against the reactor shell or can become detached therefrom. In said space water vapour may be present, for example during the gasification of hydrocarbons, which vapour condenses if the temperature of the shell falls below the dew-point. The temperature at the inside of the steel shell of the conventional gasification reactors is 100—150°C, whereas the dew-point lies in the range of 130—170°C. Consequently, in many cases condensation of the water vapour will occur, and the water subsequently runs downwards along the inside of the steel shell. Various gases, such as $NH_3$, $H_2S$, $CO_2$, HCN, which may be released in the gasification of nitrogen- and/or sulphur-containing hydrocarbon compounds and pass through the crevices and openings in the shell lining, are dissolved in the water with the result that a corrosive liquid is formed which attacks the reactor shell. $H_2S$ gas is released in relatively large quantities in the gasification of oil and readily dissolves in the condensed water vapour at the prevailing inner shell temperature of the reactor. The $H_2S$-containing condensate flows downwards along the inner shell and causes corrosion on the metal reactor shell.

In the reactors in which the insulating lining is supported by supporting rings secured to the reactor shell, corrosion has been found to occur to a greater extent on said shell at and near the securing points of said rings on the reactor shell. This increased corrosion can be explained as follows.

Since the supporting rings function as heat conducting bridges (heat from the gasification space is conducted through the supporting rings to the reactor shell) the reactor shell is subjected to an elevated temperature in relation to the rest of the shell at the points where the supporting rings are connected to the reactor shell. As a result of this and of the fact that the downward-flowing water meets with obstacles in the form of the supporting ring abutments, flow profiles are formed of condensate flowing downwards along the shell at those places on the reactor shell where the abutments receiving the above-mentioned supporting rings are located. Corrosion films previously formed are flushed away in said places by the passing condensate which, after initially flowing downwards freely along the reactor shell, is compelled to flow according to a certain profile in said places owing to the presence of said abutments and under the influence of the local temperature differences.

The elevated temperature at the abutments causes $H_2S$-containing condensate to evaporate again. The $H_2S$-containing vapour can subsequently recondense at colder places of the reactor shell and again cause corrosion. Consequently, during the downflow along the shell corrosion again takes place at those places where the corrosion films have been flushed away. Owing to the repetition of the above-mentioned process (of condensation and evaporation) corrosion progresses continuously at said places of the reactor shell. This results in the shell thickness at said places decreasing at an unacceptable rate, owing to which the lifetime of the reactors is drastically reduced. Although a more corrosion-resistant, harder metal for the reactor shell would be able to withstand the above-mentioned process for longer it is unsuitable as a solution to the corrosion problem, since "$H_2S$-stress corrosion" is apt to occur when harder metals are used, as is known to the experts.

It has now been found that the corrosion problem can be substantially solved by providing the reactor with a screen which surrounds the reactor at a certain distance completely or partly and in which holes are arranged. This ensures that the temperature on the inside of the reactor shell is kept above the dew-point. In particular those places on the reactor shell are protected which are subject to strongly varying degrees of cooling owing to influences of the weather and climate (for example wind, rain, summer/winter). As a result of the higher shell temperature, the temperature of the gas leaking outwardly through the refractory and heat-insulating layer and contacting the reactor shell, remains above dew-point, so that the entrained water vapour cannot condense and serious corrosion of the shell cannot occur.

The holes in the screen prevent an undesirable rise in the temperature of the reactor shell, since heat transfer through the perforated screen to the atmosphere remains possible.

Although the reactor shell is partly or completely surrounded by a screen it is also possible to continue checking of the reactor shell for hot spots during operation and when the shell is fully surrounded a good temperature distribution over the reactor shell is ensured, which drastically reduces the occurrence of undesirable temperature differences and consequently the occurrence of flow profiles.

Moreover, the effect on the reactor shell temperature of wind and other influences of the weather is substantially limited by the presence of the screen.

In addition, instruments such as thermocouples, etc., can be inserted through the shell holes.

The invention therefore relates to a reactor of the type mentioned in the preamble, which is characterized in that the steel reactor shell is at least partly surrounded by a metal screen which is provided with holes, a distance being present between the reactor shell and the screen.

The total free surface area of the holes in the screen is limited by a number of factors. One of those factors is the atmospheric outside temperature. If the reactor screen contains too small a total free surface area of holes, the temperature of the reactor shell can rise to an undesirably high level in summer. As mentioned above, it is also desirable that the holes should be large enough to detect hot spots and insert instruments through them.

On the other hand, the low winter temperatures will nevertheless cause excessive cooling of the reactor shell if the reactor contains a screen with too large a total free surface area of holes.

In order to provide optimum round-the-year protection against corrosion of the reactor shell according to the invention, the total free surface area of the holes is preferably not less than 20% and not more than 80% of the screen.

The material of which the screen is made is preferably heat- and corrosion-resistant in order to render the lifetime of the screen as long as possible. For this purpose most preference is given to steel plate which has been made corrosion-resistant by galvanizing.

In order to render natural convection possible in the space between the reactor shell and the screen, the distance between the screen and the reactor shell is preferably not less than 1 cm and not more than 5 cm. Moreover the largest diameter of each hole is preferably smaller than the distance between the screen and the shell.

The invention also relates to a process in which the reactor described hereinbefore is used for gasifying nitrogen- and sulphur-containing hydrocarbons which are partially combusted with free oxygen, preferably in the presence of steam.

Such a reaction is usually carried out at temperatures of 1200—1900°C and at pressures varying from 10 to 100 atm.

As already discussed, in the partial combustion of sulphur- and nitrogen-containing hydrocarbons serious corrosion of the reactor shell can occur owing to the formation of corrosive liquids if the shell temperature falls below the dew-point of the gases present.

It is therefore of essential importance that the temperature at the inner shell of the reactor is not allowed to fall below the above-mentioned dew-point. This can be ensured by maintaining a sufficiently high temperature in the reactor at the inside of the steel reactor shell. This temperature is preferably not lower than 5°C above dew-point.

To demonstrate the efficiency of the screen, temperature measurements have been made on the shells of reactors with and without a screen. The temperature was invariably measured at three points located above each other on the reactor shell.

Measuring point II is located in a part of the shell to which more heat is supplied, owing to locally increased gas velocities, than to the shell parts in which measuring points I and III are located. Consequently, the temperatures measured at point II are higher than those at points I and III, which are respectively located at bottom level and at a higher level.

The following table represents the results of the temperature measurements on the shells of two reactors (A and B).

TABLE I

| Measuring point | Reactor A | | Reactor B | |
|---|---|---|---|---|
| | without screen | with | without screen | with |
| I | 170°C | 200°C | 145°C | 170°C |
| II | 195°C | 210°C | 165°C | 175°C |
| III | 190°C | 195°C | 160°C | 165°C |

The above temperatures are the average values of 40 measurements. The conditions under which these measurements were carried out are stated below.

outside temperature : —10 — 25°C
wind velocity : 0 — 4 m/s
temperature in reactor A
and in reactor B : 1350 — 1400°C

The higher shell temperature in reactor A was caused by the fact that the heat-insulating layer in this reactor was made of materials with a higher heat conductivity than in reactor B.

This table shows clearly the effect of the screen on the shell temperature. In the case of the reactor provided with a screen the shell temperature did not fall below the dew-point, which averaged 156°C during the measurements, whereas in the case of the reactor without a screen shell temperatures lower than the dew-point occurred.

It has been found that substantial reduction of the shell thickness owing to corrosion especially occurs around those parts of the reactor shell to which the above-mentioned supporting rings are connected. An acceptable corrosion (i.e. 0.3—0.5 mm/year) is clearly exceeded here.

The reactor on which measurements of the shell thickness were carried out, had been in operation more than 25,000 hours.

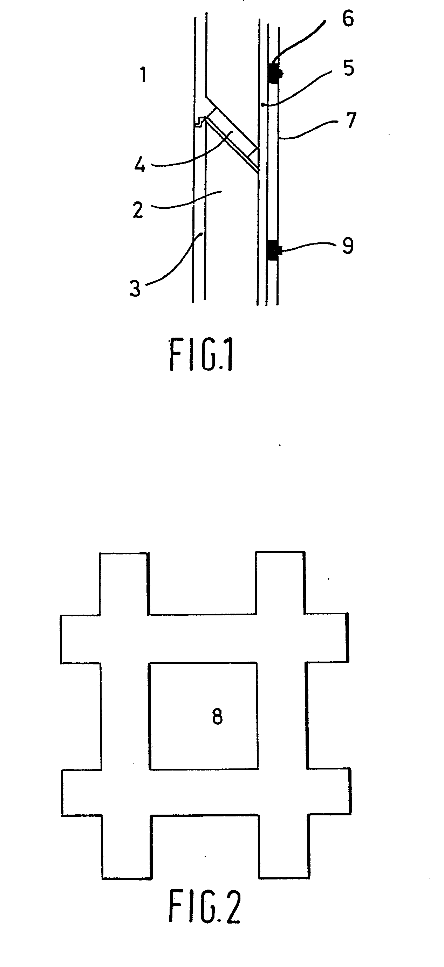

The invention will be further illustrated with reference to the drawing, in which Figure 1 shows in axial cross-section part of the reactor shell with lining and screen and Figure 2 shows a front view of part of the screen with holes. This drawing shows a preferred embodiment, to which the invention is, however, by no means limited. For example, the holes in the screen may have a plurality of shapes, and instead of completely, the reactors can also be partly, for example on the wind side, surrounded by a screen or by one more screen panels. The screen or screen panels can be secured to the reactor by ways known in the art. The screen or screen panels can also be movably arranged around the reactor.

In Figure 1 the reference numeral 2 repesents a heat-insulating layer, 3 the refractory layer, 4 a supporting ring with expansion joints, 5 the reactor shell around which the clamping bands 6 are arranged to which screen 7 is secured with bolts 9.

In Figure 2 the reference numeral 8 represents a hole, in this case square in shape; the holes are distributed regularly over the screen.

During operation, a mixture of reaction gases and water vapour may penetrate into slit-shaped spaces between the insulating layer 2 and the shell 5, causing a danger of corrosion of the reactor shell. As already stated, corrosion of the shell 5 is avoided by ensuring that the temperature of the shell 5 cannot fall below the dew-point.

## Claims

1. A reactor suitable for carrying out reactions at superatmospheric pressures and at elevated temperature, in which gases are released which are corrosive when dissolved in water, which reactor has a steel shell and the inside of which is lined with a refractory lining and a heat-insulating layer, characterized in that the steel reactor shell is at least partly surrounded by a metal screen which is provided with holes, a distance being present between the reactor shell and the screen.

2. A reactor as claimed in claim 1, characterized in that the total free surface area of the holes is at least 20% and at most 80% of the screen.

3. A reactor as claimed in claim 1 or 2, characterized in that the screen is heat- and corrosion-resistant.

4. A reactor as claimed in claim 3, characterized in that the screen is made of galvanized steel plate.

5. A reactor as claimed in claims 1—4, characterized in that the largest diameter of each hole is smaller than the distance between the screen and the shell.

6. A reactor as claimed in claim 5, characterized in that the distance between the screen and the shell is not less than 1 cm and not more than 5 cm.

7. A process for the gasification of coal and/or hydrocarbons, characterized in that gasification is carried out in a reactor as claimed in claims 1—6.

## Revendications

1. Un réacteur utilisable pour conduire des réactions à des pressions supérieures à la pression atmosphérique et à température élevée, dans lesquelles sont libérés des gaz qui sont corrosifs quand ils sont dissous dans l'eau, ce réacteur comportant une enveloppe d'acier et étant revêtu intérieurement d'une couche de matière réfractaire et calorifuge, caractérisé en ce que l'enveloppe d'acier du réacteur est entourée au moins partiellement d'un écran métallique qui comporte des trous, une distance étant présente entre l'enveloppe du réacteur et l'écran.

2. Un réacteur selon la revendication 1, caractérisé en ce que la surface libre totale des trous est au moins 20% et au maximum 80% de la surface de l'écran.

3. Un réacteur selon l'une des revendications 1 et 2, caractérisé en ce que l'écran est résistant à la chaleur et à la corrosion.

4. Un réacteur selon la revendication 3, caractérisé en ce que l'écran est formé de tôle d'acier galvanisé.

5. Un réacteur selon l'une des revendications 1 à 4, caractérisé en ce que le plus grand diamètre de chaque trou est plus petit que la distance entre l'écran et l'enveloppe.

6. Un réacteur selon la revendication 5, caractérisé en ce que la distance entre l'écran et l'enveloppe n'est pas inférieure à 1 cm et pas supérieure à 5 cm.

7. Un procédé pour la gazéification de charbon et/ou d'hydrocarbures, caractérisé en ce que la gazéification est effectuée dans un

réacteur tel que défini dans les revendications 1 à 6.

## Patentansprüche

1. Ein für die Durchführung von Umsetzungen bei überatmosphärischen Drücken und erhöhter Temperatur geeigneter Reaktor, in welchem Gase freigesetzt werden, die, in Wasser gelöst, eine korrodierende Wirkung aufweisen, mit einem Stahlmantel, dessen Innenseite mit einer feuerfesten Auskleidung und einer Wärmeisolierungsschicht versehen ist, dadurch gekennzeichnet, dass der Stahlmantel des Reaktors zumindest teilweise von einem mit Perforationen versehenen Metallschirm umgeben ist, wobei sich der Reaktormantel und der Schirm in einem Abstand voneinander befinden.

2. Reaktor nach Anspruch 1, dadurch gekennzeichnet, dass die Gesamtoberfläche der Perforationen mindestens 20% und höchstens 80% des Schirms beträgt.

3. Reaktor nach Anspruch 1 oder 2, dadurch gekennzeichnet, dass der Schirm wärme- und korrosionsbeständig ist.

4. Reaktor nach Anspruch 3, dadurch gekennzeichnet, dass der Schirm aus galvanisiertem Stahlblech hergestellt ist.

5. Reaktor nach den Ansprüchen 1 bis 4, dadurch gekennzeichnet, dass der grösste Durchmesser jeder einzelnen Perforation kleiner ist als der Abstand zwischen Schirm und Mantel.

6. Reaktor nach Anspruch 5, dadurch gekennzeichnet, dass der Abstand zwischen dem Schirm und dem Mantel nicht unter 1 cm und nicht über 5 cm beträgt.

7. Verfahren zur Vergasung von Kohle und/ oder Kohlenwasserstoffen, dadurch gekennzeichnet, dass die Vergasung in einem gemäss den Ansprüchen 1 bis 6 beanspruchten Reaktor durchgeführt wird.

FIG.1

FIG.2